# EUROPEAN PATENT SPECIFICATION

(11) **EP 3 053 670 B1**
(45) Date of publication and mention of the grant of the patent: **20.09.2017**
(21) Application number: 16152443.4
(22) Date of filing: 22.01.2016
(51) Int. Cl.: B21K 27/00, B21K 27/04, B21J 9/02

(54) **PROGRESSIVE FORMING MACHINE WITH DOWN CONVEYOR**
MEHRSTUFENPRESSE MIT ABWÄRTSFÖRDERER
PRESSE A ÉTAPES MULTIPLES AVEC TRANSPORTEUR VERS LE BAS

(30) Priority: 26.01.2015 US 201514605168
(43) Date of publication of application: 10.08.2016
(73) Proprietor: National Machinery LLC, Tiffin, OH 44883-0747 (US)
(72) Inventor: WASSERMAN, Stanley J, Fremont, OH Ohio 43420 (US); HOERIG, Douglas M, Tiffin, OH Ohio 44883 (US)
(74) Representative: Findlay, Alice Rosemary

(56) References cited:
- JP-U- H0 721 234

## Description

The invention relates to a device for conveying formed parts made in a progressive forging machine from a level of the work stations to a lower level for removal from the machine.

Progressive cold forming machines typically have several workstations spaced along a horizontal plane and a valley below the plane into which scrap trimmed and punched from a workpiece falls for collection to a gravity chute. The finish formed workpiece or part also is customarily dropped into the valley area from a discharge position of a part transfer mechanism. Formed parts can be damaged in the machine when a part freefalls from the transfer discharge and strikes a preceding part or the rigid gravity discharge chute itself. The potential for damage to a formed part involves many factors including its configuration, mass, and hardness.

One attempt to avoid the risk of damage from parts dropping on one another has been to convey them individually along a horizontal path just below the workstation plane. This arrangement has the disadvantage of obstructing the tool area by eliminating a convenient platform height that an operator could otherwise stand on. Moreover, this approach can require a hole to be provided in the sidewall of the machine frame or bed, thereby weakening the sidewall. JP H07 21234 U discloses an apparatus for handling moulded parts produced by a moulding machine.

The invention is defined by the claims.

The invention provides a generally vertically oriented conveyor in the interior of a forming machine. The conveyor receives individual finish formed parts at a transfer discharge point and lowers the part at a controlled rate of descent thereby preventing collision damage between parts in a discharge path from the machine.

The disclosed conveyor includes a pair of endless chains that vertically transport carriers that in the illustrated case are of a pan-like configuration. At one stretch or side, the chains move the carriers from the transfer area to a lower elevation within the machine where the parts are discharged at a low freefall velocity thereby eliminating or reducing a risk of damage from impacts with other finish form parts of the rigid gravity discharge chute.

The invention at least in the preferred embodiments, by enabling the parts to be mechanically lowered within the machine, avoids obstruction of an area adjacent the plane of the workstations used by an operator to service the machine. Moreover, the inventive conveyor does not require a modification of the machine frame which could compromise its rigidity and/or strength.
FIG. 1 is a cross-sectional elevational view of a progressive former within which is mounted a down conveyor of the invention;

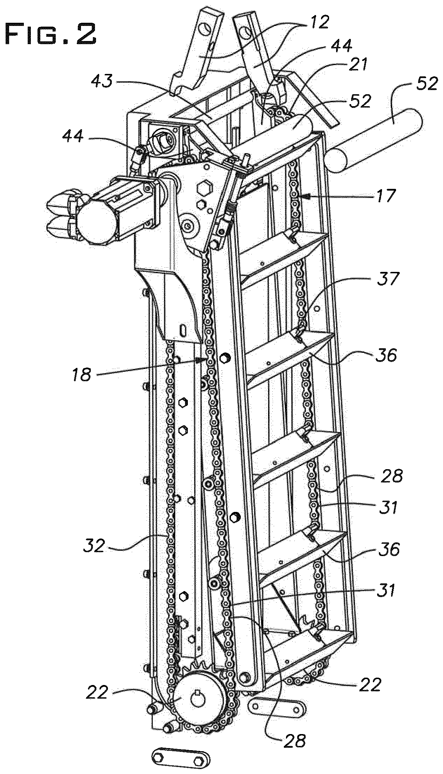

FIG. 2 is a diagrammatic perspective view of the down conveyor taken from the down side;
FIGS. 3A - 3F are successive diagrammatic views of a carrier as it moves laterally under and then downwardly under an outboard discharge position of the fingers of a transfer mechanism; and
FIG. 4 is a diagrammatic perspective view of an upper end of the down conveyor taken from the up-side.

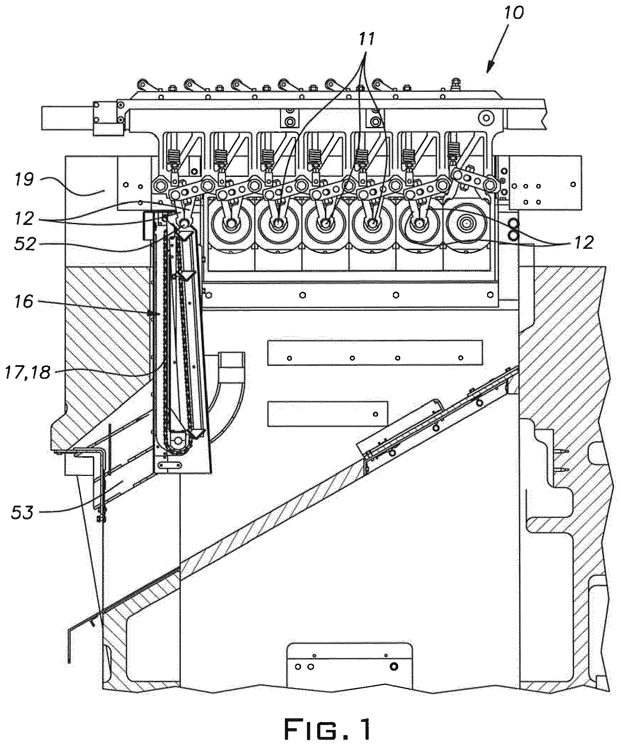

FIG. 1 illustrates the cross-sectional profile of a multi-station progressive cold forming machine 10. As is customary, metal parts or workpieces are progressively transferred to successive workstations 11 after being worked by opposed tools at preceding stations. Typically, this movement of the workpieces is accomplished with a transfer mechanism having depending fingers 12. The transfer fingers 12 grip a workpiece at a workstation 11 and in timed relation to the operation of the machine 10 shifts it to the next succeeding workstation 11.

A conveyor 16 includes two endless roller chain loops 17, 18. One chain 17 is in a vertical plane adjacent the transfer fingers 12 and a bolster 19 while the other chain 18 is displaced from the bolster. The chains 17, 18 are trained over respective upper and lower sprockets or wheels 21, 22. An outboard upper sprocket 21 is fixed on a drive shaft 23 rotatably supported in bearings mounted in a conveyor frame 24. The lower sprockets 22 are fixed on a common shaft 25 rotatably supported in a lower part of the frame 24. The outboard upper sprocket 21 drives the co-axial inboard upper sprocket 21 through the chain 18, shaft 25 and chain 17. Guide plates 28, 29 engage rollers of the chain 17, 18 and constrain the respective stretches 31, 32 of the chains 17, 18 to generally vertical, straight lines. The guide plates 28 for the down stretch 31 of the chains 17, 18 is slightly out of plumb to provide adequate clearance for the motion of carriers 36 pivotally fixed to the chains 17, 18.

The carriers 36 are shallow pan-like structures that, for example, can have a V-shaped cross-section. The carriers or buckets 36 are shorter than the spacing between the chains 17, 18 so that, as will be understood, the carriers can swing between the chains. At each end, a carrier 36 is pivotally connected to a chain through a rigid bracket 37 of T-shaped profile. The bracket 37 is pivotally fixed to a pin of a chain 17, 18 at 38. A distal part of the bracket 37 is straddled by a pair of rollers 39. As discussed below, the rollers 39 serve like cam followers to maintain a desired orientation of the carriers 36. In the various illustrated views, the sprockets 21, 22 turn clockwise; the carriers 36 on the downward chain stretch 31 are concave upward and the carriers on the upward stretch 32 hang downwardly.

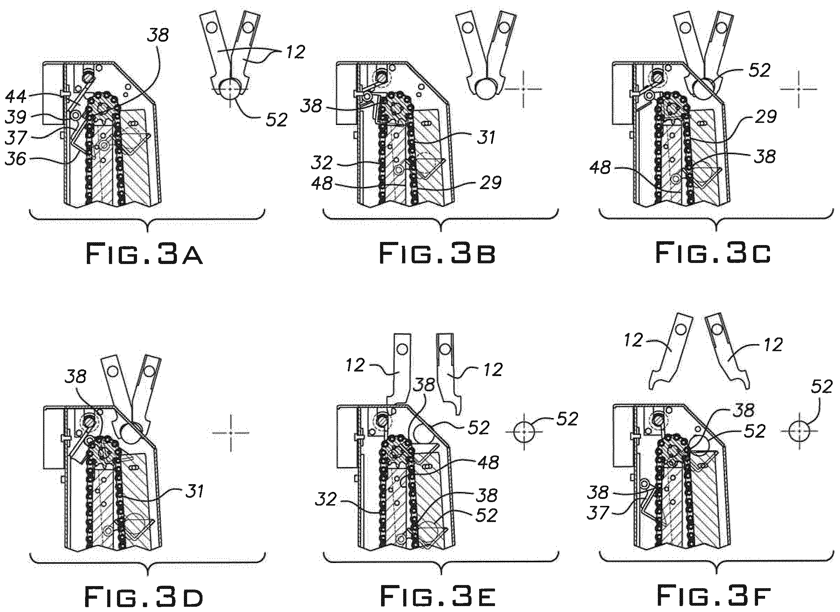

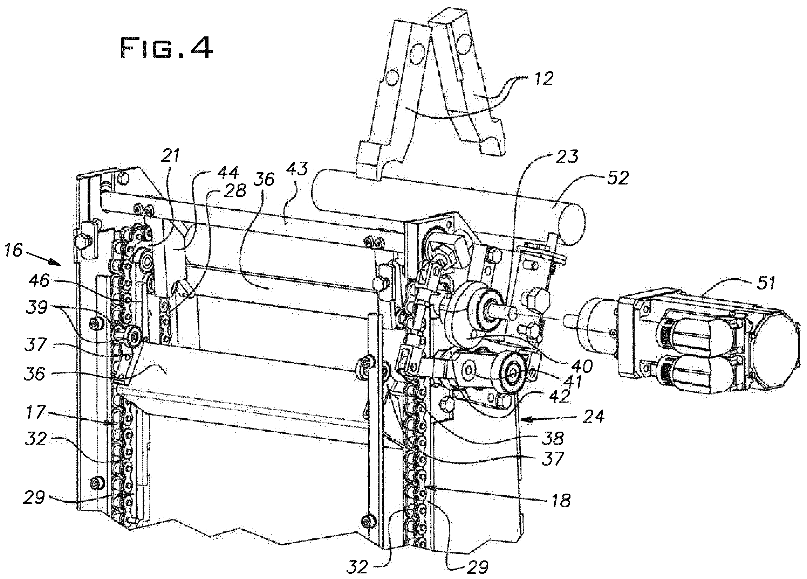

FIGS. 3A - 3F illustrate a transition of a carrier 36 from a hang-down position to a concave upward position, hereafter sometimes called a carrying position. A preliminary scan of these views illustrate that a carrier 36 pivots from the hang-down position through a space between the chains 17, 18. These kinematics are produced by a cam 40 (FIG. 4) fixed on the drive shaft 23 and driving a lever 41 through a cam follower 42. The lever 41 oscillates a shaft 43 parallel to the sprocket drive shaft 23. The shaft 43, in turn, pivotally rocks or oscillates a pair of channels 44, one adjacent each of the chains 17, 18. The interior of the channels 44 is sized to receive a roller 39 associated with a carrier 36. As noted, the brackets 37 provide a pivot connection 38 between a carrier 36 and a chain 17, 18.

As a carrier 36 rises on the left chain stretch 32, it is led by its associated rollers 39 (FIG. 3A). A roller bears against a vertical track plate 46 (FIG. 4) until it is received in an associated channel 44. The pitch diameter of the upper sprockets 21 is equal to the spacing of the carrier pivots 38. The cam 40 is configured and timed to swing the channels 44 into the paths of the rollers 39 as the rollers approach the top of the plate 46. As the sprockets 21 continue to rotate, the cam 40 causes the channels 44 to slow the rise of the rollers 39 relative to the chains 17, 18 thereby pivoting a carrier toward its carrying position (FIGS. 3B - 3D).

As the pivot center 38 on a chain 17, 18 starts to descend (FIG. 3E), the channels 44, still being located by the cam 40, orient the carrier 36 to the carrying position. The distal end of the channels 44 align with generally vertical tracks 48 so that as the carrier 36 descends on the chain stretch 31, the rollers 39 ride on the tracks 48. The roller tracks 48 and chain tracks or guide plates 29 are parallel so that the concave up carrying orientation of a carrier 36 is maintained through the descent of the carrier until the rollers 39 run off the bottoms of the tracks 48 and the carrier is thereby released to pivot downwardly to a workpiece releasing position.

The sprocket drive shaft 23 and, therefore, the conveyor 16, is preferably operated by a servomotor (schematically illustrated at 51 in FIG. 4) synchronized with the speed and timing of the forming machine 10.

The motor 51 rotates the shaft 23 so that a carrier 36 is located directly under the transfer fingers 12 when the transfer fingers are opened. A part or workpiece held by the transfer fingers 12 drops a relatively short distance, for example, in comparison to the depth of the adjacent frame sidewall which is a measure of the distance a part would otherwise be required to fall for removal from the machine. The kinematics of the carrier 36 adjacent the upper sprockets 21 do not require the carrier to rise above the plane of the workstations 11 when it transitions between a workpiece discharging orientation to the carrying orientation. At the bottom of the tracks, the rollers 39 and, therefore, the carrier 36 are released so that the carrier can swing to its downward hanging position and softly deposit a workpiece 52 on a chute 53 (FIG. 1) or other delivery mechanism.

It should be evident that this disclosure is by way of example and that various changes may be made by adding, modifying or eliminating details, without departing from the scope of the appended claims.

## Claims

1. A progressive forming machine having a frame supporting a plurality of workstations uniformly spaced in a horizontal plane, a transfer mechanism for shifting parts from one station to another and from a last station to a discharge station, and a conveyor (16) in the frame for lowering parts from the transfer discharge station, the conveyor comprising an endless loop (17, 18) trained over top and bottom wheels (21, 22) and forming up and down stretches, a plurality of carriers (36) uniformly spaced along the loop (17, 18), the conveyor (16) being adapted to dispose a carrier (36) beneath the part discharge station in timed relation to the operating cycle of the machine whereby the carrier (36) can receive a part dropped from the discharge station, the conveyor (16) having a plurality of carriers (36) on each stretch of the loop (17, 18) whereby the conveyor (16) can deliver a part to a level substantially below the discharge station at a low velocity rate in relation to the operating speed of the machine, **characterised in that** said carriers (36) are pivotally mounted on said loop (17, 18) and a mechanism is arranged to pivot said carriers (36) from a downward discharge orientation to an upward carrying orientation while a respective pivot connection of the carrier (36) is adjacent the top wheel (21).

2. A machine as set forth in claim 1, wherein the orientation of a carrier (36) is controlled by the position of an associated carrier roller (39) having a fixed relation to the carrier (36).

3. A machine as set forth in either claim 1 or claim 2, wherein the mechanism includes a channel (44) that guides successive carrier rollers (39) through a path to orient a carrier (36) to the part carrying orientation from the downward orientation as a portion of the loop (17, 18) associated with the carrier passes over the top wheel (21).

4. A machine as set forth in claim 3, wherein said channel (44) pivots about a fixed horizontal pivot axis in timed relation to the rotation of one of said wheels (21, 22).

5. A machine as set forth in any preceding claim, wherein two loops (17, 18) are provided and said carriers (36) are disposed between said loops (17, 18) and are pivotally fixed to both loops (17, 18).

## Patentansprüche

1. Progressive Formmaschine mit einem Rahmen, der mehrere Arbeitsstationen trägt, die gleichmäßig in einer horizontalen Ebene beabstandet sind, einem Transportmechanismus zum Verschieben von Teilen von einer Station zur anderen und von einer letzten Station zu einer Entladestation, und einem Förderer (16) in dem Rahmen zum Absenken von Teilen von der Transportentladestation, wobei der Förderer eine endlose Schleife (17, 18) aufweist, die über obere und untere Räder (21, 22) geführt ist und Auf- und Abwärtsstrecken bildet, mehrere Träger (36), die gleichmäßig entlang der Schleife (17, 18) beabstandet sind, wobei der Förderer (16) so ausgelegt ist, dass er einen Träger (36) unterhalb der Teileentladestation in einer zeitlich gesteuerten Beziehung zum Betriebszyklus der Maschine anordnet, so dass der Träger (36) ein von der Entladestation gefallenes Teil aufnehmen kann, wobei der Förderer (16) mehrere Träger (36) auf jeder Strecke der Schleife (17, 18) hat, so dass der Förderer (16) ein Teil zu einer Ebene erheblich unterhalb der Entladestation mit einer niedrigeren Geschwindigkeit im Vergleich zur Betriebsgeschwindigkeit der Maschine liefern kann, **dadurch gekennzeichnet, dass** die genannten Träger (36) an der genannten Schleife (17, 18) schwenkbar montiert sind und ein Mechanismus zum Schwenken der genannten Träger (36) von einer abwärtigen Entladeorientierung in eine aufwärtige Tragorientierung angeordnet ist, während sich eine jeweilige Schwenkverbindung des Trägers (36) neben dem oberen Rad (21) befindet.

2. Maschine nach Anspruch 1, wobei die Orientierung eines Trägers (36) durch die Position einer assoziierten Trägerrolle (39) mit einer festen Beziehung zum Träger (36) gesteuert wird.

3. Maschine nach Anspruch 1 oder Anspruch 2, wobei der Mechanismus einen Kanal (44) aufweist, der sukzessive Trägerrollen (39) über eine Bahn führt, um einen Träger (36) in der Teiletragorientierung von der abwärtigen Orientierung zu orientieren, während ein mit dem Träger assoziierter Abschnitt der Schleife (17, 18) über das obere Rad (21) passiert.

4. Maschine nach Anspruch 3, wobei der genannte Kanal (44) um eine feste horizontale Schwenkachse in einer zeitlich gesteuerten Beziehung zur Rotation von einem der genannten Räder (21, 22) schwenkt.

5. Maschine nach einem vorherigen Anspruch, bei der zwei Schleifen (17, 18) vorgesehen sind und die genannten Träger (36) zwischen den genannten Schleifen (17, 18) angeordnet und an beiden Schleifen (17, 18) schwenkbar befestigt sind.

## Revendications

1. Machine de formage progressif présentant un cadre qui supporte une pluralité de postes de travail espacés uniformément dans un plan horizontal, un mécanisme de transfert pour déplacer des pièces d'un poste à un autre et d'un dernier poste à un poste de décharge, et une bande transporteuse (16) dans le cadre pour abaisser les pièces depuis le poste de décharge de transfert, la bande transporteuse comprenant une boucle sans fin (17, 18) passée sur des roues supérieure et inférieure (21, 22) et formant des étendues supérieure et inférieure, une pluralité de supports (36) espacés uniformément le long de la boucle (17, 18), la bande transporteuse (16) étant adaptée pour disposer un support (36) en dessous du poste de décharge de pièces en une relation cadencée avec le cycle de fonctionnement de la machine moyennant quoi le support (36) peut recevoir une pièce lâchée par le poste de décharge, la bande transporteuse (16) comportant une pluralité de supports (36) sur chaque étendue de la boucle (17, 18) moyennant quoi la bande transporteuse (16) peut délivrer une pièce à un niveau sensiblement inférieur au poste de décharge à une faible vitesse par rapport à la vitesse opérationnelle de la machine, **caractérisée en ce que** lesdits supports (36) sont montés de manière pivotante sur ladite boucle (17, 18) et un mécanisme est agencé pour faire pivoter lesdits supports (36) d'une orientation de décharge vers le bas vers une orientation de support vers le haut pendant qu'une connexion pivot respective du support (36) est adjacente à la roue supérieure (21).

2. Machine selon la revendication 1, dans laquelle l'orientation d'un support (36) est commandée par la position d'un rouleau de support associé (39) ayant une relation fixe par rapport au support (36).

3. Machine selon la revendication 1 ou la revendication 2, dans laquelle le mécanisme comporte une gorge (44) qui guide les rouleaux de supports successifs (39) le long d'un chemin pour orienter un support (36) vers l'orientation de support de pièces depuis l'orientation vers le bas quand une partie de la boucle (17, 18) associée au support passe sur la roue supérieure (21).

4. Machine selon la revendication 3, dans laquelle ladite gorge (44) pivote autour d'un axe pivot horizontal fixe en relation cadencée avec la rotation de l'une desdites roues (21,22).

5. Machine selon l'une quelconque des revendications précédentes, dans laquelle deux boucles (17, 18) sont fournies et lesdits supports (36) sont disposés entre lesdites boucles (17, 18) et sont fixés de manière pivotante aux deux boucles (17,18).
